# EUROPEAN PATENT SPECIFICATION

(11) **EP 0 342 941 B1**
(45) Date of publication and mention of the grant of the patent: **08.09.1993**
(21) Application number: 89304960.1
(22) Date of filing: 17.05.1989
(51) Int. Cl.: B65D 41/04, C08J 9/08

(54) **Composition for plastic article with unitarily molded foam layer**
Zusammensetzung für einen Kunststoffgegenstand, der eine gleichzeitig geformte Schaumschicht enthält
Composition pour un article en matière plastique présentant une couche expansée formée simultanément

(30) Priority: 17.05.1988 US 195094
(43) Date of publication of application: 23.11.1989
(73) Proprietor: PERMIAN RESEARCH CORPORATION, Big Spring, TX 79720 (US)
(72) Inventor: Johnson, Marion, Baytown Texas 77520 (US); Hahn, Granville J., Big Spring Texas 79720 (US); Ramos, Ramiro Victor, Big Spring Texas 79720 (US)
(74) Representative: Carpmael, John William Maurice

(56) References cited:
- EP-A- 0 143 545
- WO-A-88/03115
- DE-A- 3 224 071
- DATABASE WPIL, abs.no.88-088466, Derwent Publications Ltd, London, GB

## Description

### CROSS-REFERENCE TO RELATED APPLICATION

This application is a continuation-in-part of United States Patent Application Serial No. 06/922,127, filed October 23, 1986, issued May 17, 1988, as U.S. 4,744,478.

### TECHNICAL FIELD

This invention relates to molded plastic articles, and more particularly, to plastic closures for glass or plastic containers. One aspect of the invention relates to a container closure comprising a unitarily molded, foamed polymeric sealing layer. Another aspect of the invention relates to a polymeric closure having a unitarily foamed layer that is formed in situ. Still another aspect of the invention relates to a preferred compostion of matter that is useful for producing the subject closure.

### BACKGROUND OF THE INVENTION

Plastic container closures and, more particularly, plastic closures for carbonated beverage bottles having threaded necks are well known, having previously been disclosed, for example, in United States Patents 4,310,101; 4,326,639; 4,394,918; 4,461,391; and 4,476,987. Such closures typically employ sealing discs and/or molded flanges which contact the bottle lip to reduce the loss of carbonation. Used alone, integrally molded plastic flanges have not provided the desired sealing characteristics. Although sealing discs have proved to be quite effective for reducing loss of carbonation, they are usually separately manufactured and then inserted into a molded bottle cap, thereby increasing both the time and expense required to produce a satisfactory closure. A unitarily molded plastic bottle cap having satisfactory sealing characteristics is therefore needed, and such a closure is disclosed in U.S. 4,744,478.

In formulating compositions suitable for use in molding polymeric articles, many different factors must be considered. Such factors include, for example, the product configuration, the intended use, the use environment, whether or not the product will contact food or drink intended for human consumption, processing considerations, performance specifications, recyclability, and the like.

Compositions previously known and utilized by others for molding plastic closures for containers such as PET carbonated beverage bottles are not useful for producing closures having an integrally molded, foamed sealing layer as taught in the parent application. A new moldable, foamable, thermoplastic composition that is particularly suitable for molding such closures is therefore needed.

The present invention provides a molded polymeric container closure having an integrally molded, foamed sealing layer, said container closure being molded from a moldable composition comprising a major portion of polypropylene, and characterised in that the moldable composition further comprises: from 1.25 to 6 pphr (parts per hundred of resin) of foam concentrate, from 0.15 to 1 pphr calcium carbonate, from 0.03 to 0.15 pphr amorphous silicon dioxide from 0.1 to 0.4 pphr lubricant selected from the group consisting of synthetic waxes and distilled monoglycerides, from 0.1 to 0.4 pphr lubricant selected from the group consisting of N,N'-dioleoyle thylenediamine and calcium stearoyl-2- lactylate, from 0.15 to 0.3 pphr unsaturated fatty monoamide, and from 0.5 to 2 pphr titanium dioxide concentrate.

The present invention further provides a moldable and foamable thermoplastic composition comprising a major portion of moldable polypropylene resin, characterised in that the composition further comprises: from 1.25 to 6 parts per hundred of resin (pphr) of foam concentrate; from 0.15 to 1 pphr calcium carbonate; from 0.03 to 0.15 pphr amorphous silicon dioxide; from 0.1 to 0.4 pphr lubricant selected from the group consisting of synthetic waxes and distilled monoglycerides; from 0.1 to 0.4 pphr lubricant selected from the group consisting of N,N'-dioleoylethylenediamine and calcium stearoyl-2-lactylate; from 0.15 to 0.3 pphr unsaturated fatty momoamide, and from 0.5 to 2 pphr titanium dioxide concentrate.

The moldable and foamable composition of the present invention is particularly suitable for use in molding plastic articles having an integrally molded, foamed sealing layer as taught in US-A-4744478. The preferred such plastic article is a plastic bottle cap adapted to provide sealing engagement with the threaded neck of a glass or plastic bottle without the need for sealing means.

According to a particularly preferred embodiment of the invention, a container closure as above is provided that is molded from a composition comprising a copolymer of polypropylene and rubber, about 3 pphr (parts per hundred of resin) of foam concentrate further comprising sodium bicarbonate and citric acid, about 0.2 pphr calcium carbonate, about 0.1 pphr amorphous silicon dioxide, about 0.2 pphr lubricant selected from the group consisting of synthetic waxes and distilled monoglycerides, about 0.2 pphr lubricant selected from the group consisting of N,N'-dioleoylethylenediamino and calcium stearoyl-2-lactylate, about 0.25 pphr unsaturated fatty monoamide, and about 1 pphr titanium dioxide concentrate.

### BRIEF DESCRIPTION OF THE DRAWINGS

The plastic closure of the invention is further described and explained in reference to the following drawings wherein:
FIGURE 1 is a front elevation view partially in section of the bottle cap of the invention applied to the neck of a bottle;
FIGURE 2 is a sectional bottom plan view taken along line 2-2 of Figure 1; and
FIGURE 3 is a detail view depicting an enlarged portion of the sectional view in Figure 1 to better illustrate the formed polymer layer of the invention and the line of contact between the bottle cap and the upwardly extending neck of a bottle to which the cap is attached.

Like numerals are used to describe like parts in all figures of the drawings.

### DETAILED DESCRIPTION OF THE PREFERRED EMBODIMENT

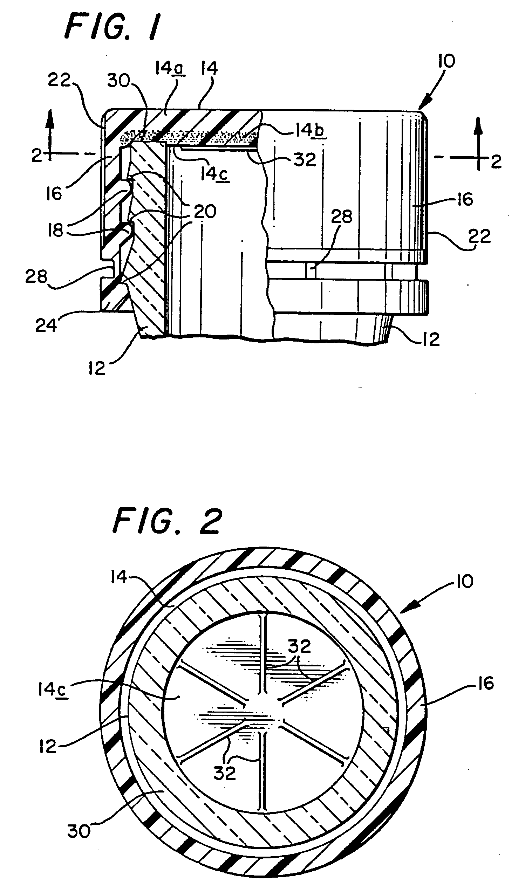

Referring to Figure 1, bottle cap 10 is illustrative of a closure made in accordance with the present invention, and is depicted in threaded engagement with bottle neck 12. For ease of illustration, the remainder of the bottle is broken away. Similarly, in the left half of Figure 1, a portion of bottle cap 10 and bottle neck 12 are broken away to depict a partial sectional view. Bottle caps made in accordance with the invention are successfully utilized with bottles made of either glass or plastic.

Bottle cap 10 preferably comprises circular end wall 14 and circumferentially extending side wall 16. End wall 14 preferably further comprises foamed polymer layer 14b sandwiched between two relatively denser layers 14a, 14c of the same polymer. Layer 14a is the primary structural layer of end wall 14 and is desirably molded together with side wall 16 to provide a strong, continuous closure capable of withstanding pressures characteristic of the pressures encountered in sealing carbonated beverage containers. According to a preferred embodiment, when threaded onto the neck of a container such as a PET bottle with a torque of about 2-3 Nm (20 inch-pounds), nominal 28mm bottle caps 10 weighing about 2.8 grams and made according to the composition of the invention will desirably not leak when subjected a pressure of 690 kN/m² (100 psi) for one minute, and will desirably not blow off when subjected to a pressure of as much as 1034 kN/m² (150 psi) for a short period.

The inwardly facing surface of side wall 16 preferably further comprises molded threads 18 which engage threads 20 of bottle neck 12. A plurality of circumferentially spaced ribs 22 are optionally provided on the outwardly facing surface of side wall 16 to assist the consumer in gripping bottle cap 10, although it will be understood by those of skill in the art upon reading this disclosure that knurling or other surface texturing can similarly be imparted to the outwardly facing surface of side wall 16 drawing the molding process for that purpose.

To provide evidence of tampering, bottle cap 10 preferably further comprises pilfer ring 24, which engages shoulder 26 of bottle neck 12. Pilfer ring 24 is desirably molded together with end wall 14 and side wall 16 of bottle cap 10, and is connected to the lower portion of side wall 16 by a plurality of relatively narrow, circumferentially spaced thermoplastic bridges 28 that are adapted to fail in tension when side wall 16 is rotated so as to remove bottle cap 10 from bottle neck 12. It is understood of course that the configuration of pilfer ring 24 is not critical to use of the present invention, and numerous pilfer ring structures are presently in use and/or described in the prior art.

Referring again to end wall 14, foamed polymer layer 14b is desirably disposed between unfoamed layer 14a, which has a thickness comparable to that of side wall 16, and layer 14c, which comprises a relatively thin skin of unfoamed polymer. According to one embodiment of the invention, the thickness of unfoamed polymer layer 14a is about twice the thickness of unfoamed polymer layer 14c, and foamed polymer layer 14b is about twice the thickness of unfoamed polymer layer 14a. The overall thickness of end wall 14 preferably ranges up to about 0.6 cm, with a thickness of about 0.32 cm (0.125 inches) being most preferred for carbonated beverage bottle closures manufactured from polypropylene. It is understood, however, that the thickness of end wall 14 and its constituent layers 14a, 14b, 14c can vary depending on the polymeric resin used, the dimensions and geometry of the container, and the pressures which the closure must withstand during use. The structure of layers 14a, 14b, 14c and the manner in which they cooperate in the subject closure are further described and explained in relation to the method by which the layers are made.

Bottle cap 10 preferably comprises a major portion of a moldable thermoplastic resin, and most preferably, a major portion of an impact grade copolymer of polypropylene. Impact grade plastics comprise a minor amount of rubber such as EPDM or SBR rubber that is copolymerized with the plastic to yield a product having better impact resistance.

According to one preferred embodiment of the invention, a container closure is provided that is molded from a composition comprising a copolymer of polypropylene and rubber, from 1.25 to 6 pphr (parts per hundred of resin) foam concentrate further comprising sodium bicarbonate and citric acid, from 0.15 to 1 pphr calcium carbonate, from 0.03 to 0.15 pphr amorphous silicon dioxide, from 0.1 to 0.4 pphr lubricant selected from the group consisting of synthetic waxes and distilled monoglycerides, from 0.1 to 0.4 pphr lubricant selected from the group consisting of N,N′-dioleoylethylenediamine and calcium stearoyl-2-lactylate, from 0.15 to 0.3 pphr unsaturated fatty monoamide, and from 0.5 to 2 pphr titanium dioxide concentrate.

Particularly referred polymeric resins for use in the compositions of the invention are Shell Propylene Copolymer 7912S marketed by Shell Chemicals and El Paso 57S20V Polypropylene marketed by El Paso Products Company. Both resins have a melt flow in the range of from 20 to 22 and are modified by the addition of rubber to improve impact properties. When using El Paso 57S20V, the addition of from 0.1 to 0.25 pphr sodium benzoate is preferred to serve as a polymer crystal nucleator. The addition of sodium benzoate is not necessary when using Shell 7912S.

The compositions of the invention preferably further comprise from 1.25 to 6 pphr, and most preferably about 3 pphr, of foam concentrate containing sodium bicarbonate and citric acid. A preferred foam concentrate for use in the compositions of the invention is XMF 1570 H marketed by Nortech, a division of Enron Chemical Company. XMF 1570 H comprises 50% sodium bicarbonate/citric acid in a low density polyethylene base resin.

The compositions of the invention preferably further comprise from 0.15 to 1 pphr, and most preferably about 0.2 pphr, calcium carbonate. A preferred calcium carbonate for use in the compositions of the invention is Omyacarb UF® marketed by Omya, Inc.

The compositions of the invention preferably further comprise from 0.03 to 0.15 pphr, and most preferably 0.1 pphr, amorphous silicon dioxide. A preferred silica for use in the compositions of the invention is Cab-O-Sil® M-5 marketed by Cabot Corporation.

The compositions of the invention preferably further comprise from 0.1 to 0.4 pphr lubricant selected from the group consisting of synthetic waxes and distilled monoglycerides. A preferred synthetic wax for use in the compositions of the invention is Acrawax C® (prilled) marketed by Glyco Inc. According to one particularly preferred embodiment of the invention, about 0.2 pphr Acrawax C® is utilized in making the subject compositions. When a distilled monoglyceride is selected for use in the compositions of the invention, PATIONIC 901® marketed by Patco Designed Chemicals is preferred. According to one particularly preferred embodiment of the invention, about 0.1 pphr PATIONIC 901® is utilized in making the subject compositions.

The compositions of the invention preferably further comprise from 0.1 to 0.4 pphr lubricant selected from the group consisting of N,N'-dioleoylethylenediamine and calcium stearoyl-2-lactylate. A preferred N,N'-dioleoylethylenediamine for use in the compositions of the invention is Glycolube VL® (prilled) marketed by Glyco Inc. According to one particularly preferred embodiment of the invention, about 0.2 pphr Glycolube VL® is utilized in making the subject compositions. When calcium stearoyl-2-lactylate is selected for use in the compositions of the invention, PATIONIC 930® marketed by Patco Designed Chemicals is preferred. According to one particularly preferred embodiment of the invention, about 0.1 pphr PATIONIC 930® is utilized in making the subject compositions.

The compositions of the invention preferably further comprise from 0.15 to 0.3 pphr, and most preferably 0.25 pphr, unsaturated fatty monoamide. A preferred unsaturated fatty monoamide for use in the compositions of the invention is Kemamide E® fatty amide marketed by the Humko Chemical Division of Witco Chemical Corporation.

The compositions of the invention preferably further comprise from 0.5 to 2 pphr, and most preferably about 1 pphr, titanium dioxide concentrate. A preferred titanium dioxide concentrate for use in the compositions of the invention is #3015D marketed by Southwest Chemical. While this material is preferred for use in a composition for making a white closure such as a bottle cap, it is understood that other similar pigments can also be utilized within the scope of the invention for making products of other colors. In addition to functioning as a pigment within the composition, it is also believed that the titanium dioxide concentrate of the preferred embodiment also functions as a nucleator and lubricant.

To manufacture a closure such as a bottle cap utilizing the composition of the invention, a masterbatch is desirably prepared in which the thermoplastic resin and other preferred additives are combined in a hopper and extruded together to obtain good dispersion of the additives throughout the thermoplastic melt. The extrudate is pelletized and stored until use. At the time of use, the masterbatch pellets are fed into the extruder section of an injection molding machine. While preferred compositions are made using the materials disclosed herein, it is understood that compositions of the invention can also be made by substituting functionally equivalent materials in quantitites sufficient to achieve substantially similar results. Thus, for example, a foam concentrate comprising an azodicarbonamide might be substituted for the foam concentrate comprising sodium bicarbonate in citric acid within the scope of the invention.

The mold tooling is preferably designed so that when the mold is initially closed, the space within the mold cavity approximately corresponds to the configuration of layers 14a and 14c of end wall 14, side wall 16, pilfer ring 24 and bridges 28 of bottle cap 10. This is advantageously accomplished with mold tooling comprising a mold core defining the interiorly facing walls and a mold cavity portion defining the outwardly facing walls of bottle cap 10. The core portion of the mold tooling is preferably further adapted by means of a retractable insert to slightly increase the volume of that portion of the mold cavity defining end wall 14 during the molding process. As the plastified resin begins to cool within the mold, the insert is retracted, thereby reducing the pressure within that portion of the mold corresponding to end wall 14 of bottle cap 10 sufficiently to permit the foaming agent to expand. As the insert retracts, the relatively cool boundary layer of resin abutting the retracting surface moves with it, forming layer 14c of end wall 14. Behind the boundary layer, the foam concentrate causes the thermoplastic resin to expand into the zone of reduced pressure, thereby forming individual cells of foamed polymer about the nucleator sites. Upon completion of cooling, these cells of foamed polymer define layer 14b of end wall 14. The relative thickness of layers 14a, 14b and 14c will therefore vary according to the polymer composition, the pressure within the mold cavity before and after retraction of the insert, the degree of cooling prior to and during retraction of the insert, and the distance the insert is retracted. Also, while the bottle cap disclosed herein is made through use of a retractable surface on the core side of the mold, it should also be understood that closures can also be made by utilizing retractable surfaces on the cavity side of the mold.

If the surface of the retractable insert is coextensive with the inwardly facing surface of layer 14c of bottle cap 10, layer 14b formed by the expansion of resin into the zone of reduced pressure will create a continuous layer of foamed polymer spanning the inside circumference of bottle cap 10. On the other hand, if the surface of the retractable insert is an annulus, layer 14b will comprise a circumferentially extending annular "doughnut" of foamed polymer separating layers 14a and 14c except in the central portion of end wall 14 of bottle cap 10.

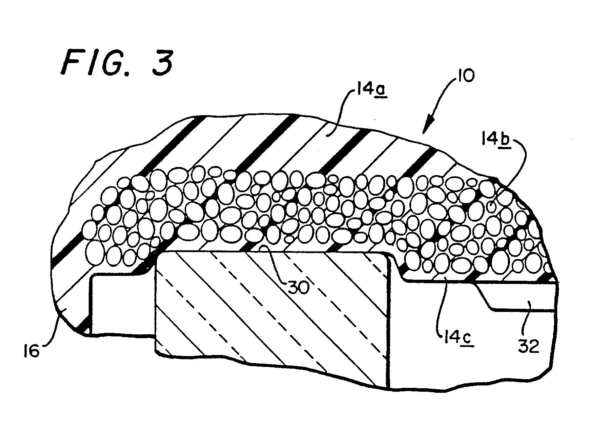

Referring to Figures 1 and 3, it is seen that when bottle cap 10 is tightly applied to bottle neck 12, top edge 30 of bottle neck 12 exerts force against the surface of layer 14c adjacent thereto. This force causes the foamed polymer cells to compress behind that portion of layer 14c contacting top edge 30, which is evidenced in Figures 1 and 3 by the upward deflection of layer 14c adjacent to top edge 30. This offset provides a tight seal between bottle cap 10 and bottle neck 12 as desired.

If desired, optional ribs 32 can be incorporated into layer 14c of end wall 14 as shown in Figures 1 and 2 by providing correspondingly shaped recesses in the face of the of the tool corresponding to the interiorly facing surface of layer 14c. Such ribs, which are shown emanating radially from near the center of layer 14c in Figure 2, may assist in further strengthening end wall 14.

To avoid any appreciable foaming of the polymer in side wall 16 (including threads 18), pilfer ring 24 or bridges 28, it is emphasized that all surfaces of both the core and cavity halves of the injection molding tooling except the retractable insert remain locked in fixed relation to each other from the time polymer is first injected into the mold cavity until sufficient cooling has occurred to maintain the dimensional stability of those portions of bottle cap 10 outside the mold.

The container closures disclosed herein exhibit highly desirable strength-to-weight ratios and low bulk densities when compared to other unitarily molded polymeric closures. Depending upon the polymer compositions utilized, the geometry of the closure, and the molding apparatus and procedures, closures can be produced that will satisfactorily confine either gaseous or liquid fluids within a container.

Similarly, while the compositions disclosed herein are preferred for use in molding bottle caps, it will be understood and appreciated upon reading this disclosure that the compositions of the invention can be similarly useful for molding other polymeric articles. Other advantages of the subject closures and various alterations and modifications of the compositions disclosed herein will become apparent to those of ordinary skill in the art upon reading the present disclosure, and it is intended that the present invention be limited only by the broadest interpretation of the appended claims to which the inventor may be legally entitled.

## Claims

1. A molded polymeric container closure having an integrally molded, foamed sealing layer, said container closure being molded from a moldable resin comprising a major portion of polypropylene, and characterised in that the moldable resin further comprises: from 1.25 to 6 parts per hundred of resin (pphr) of foam concentrate; from 0.15 to 1 pphr calcium carbonate; from 0.03 to 0.15 pphr amorphous silicon dioxide; from 0.1 to 0.4 pphr lubricant selected from the group consisting of synthetic waxes and distilled monoglycerides; from 0.1 to 0.4 pphr lubricant selected from the group consisting of N,N'-dioleoylethylenediamine and calcium stearoyl-2-lactylate; from 0.15 to 0.3 pphr unsaturated fatty monoamide; and from 0.5 to 2 pphr titanium dioxide concentrate.

2. The closure of claim 1 wherein said polypropylene resin is an impact polypropylene resin.

3. The closure of claim 1 wherein said foam concentrate further comprises sodium bicarbonate and citric acid.

4. The closure of claim 3, comprising about 3 pphr foam concentrate further comprising sodium bicarbonate and citric acid.

5. The closure of claim 1, comprising about 0.2 pphr calcium carbonate.

6. The closure of claim 1, comprising about 0.1 pphr amorphous silicon dioxide.

7. The closure of claim 1, comprising about 0.2 pphr synthetic wax.

8. The closure of claim 1, comprising about 0.1 pphr distilled monoglyceride.

9. The closure of claim 1, comprising about 0.2 pphr N,N'-dioleoylethylenediamine.

10. The closure of claim 1, comprising about 0.1 pphr calcium stearoyl-2-lactylate.

11. The closure of claim 1, comprising about 0.25 pphr unsaturated fatty monoamide.

12. The closure of claim 1, comprising about 1 pphr titanium dioxide concentrate.

13. The closure of claim 1 wherein said closure is a bottle cap comprising integrally molded polymeric end and side walls, said end wall further comprising an unfoamed first layer and a second relatively less dense foamed layer that is formed in situ.

14. A moldable and foamable thermoplastic composition comprising a major portion of moldable polypropylene resin, characterised in that said composition further comprises from 1.25 to 6 parts per hundred of resin (pphr) foam concentrate; from 0.15 to 1 pphr calcium carbonate; from 0.03 to 0.15 pphr amorphous silicon dioxide; from 0.1 to 0.4 pphr lubricant selected from the group consisting of synthetic waxes and distilled monoglycerides; from 0.1 to 0.4 pphr lubricant selected from the group consisting of N,N'-diolecylethylenediamine and calcium stearoyl-2-lactylate; from 0.15 to 0.3 pphr unsaturated fatty monoamide; and from 0.5 to 2 pphr titanium dioxide concentrate.

15. The composition of claim 14 wherein said polypropylene resin is an impact polypropylene resin.

16. The composition of claim 14 wherein said foam concentrate further comprises sodium bicarbonate and citric acid.

17. The composition of claim 16, comprising about 3 pphr foam concentrate further comprising sodium bicarbonate and citric acid.

18. The composition of claim 14, comprising about 0.2 pphr calcium carbonate.

## Patentansprüche

1. Geformter, polymerer Behälter-Verschluß mit einer integral geformten, geschäumten Dichtungsschicht, wobei der Behälter-Verschluß aus einem formbaren Harz, umfassend eine Hauptmenge Polypropylen, geformt ist, dadurch gekennzeichnet, daß das formbare Harz weiterhin umfaßt: von 1,25 bis 6 Teile pro 100 Teile Harz (pphr) Schaumkonzentrat, von 0,15 bis 1 pphr Calciumcarbonat, von 0,03 bis 0,15 pphr amorphes Siliciumdioxid, von 0,1 bis 0,4 pphr Gleitmittel ausgewählt aus der Gruppe von synthetischen Wachsen und destillierten Monoglyceriden, von 0,1 bis 0,4 pphr Gleitmittel ausgewählt aus der Gruppe von N,N'-Dioleoylethylendiamin und Calciumstearoyl-2-lactylat, von 0,15 bis 0,3 pphr ungesättigtes Fettsäure-Monoamid und von 0,5 bis 2 pphr Titandioxidkonzentrat.

2. Verschluß nach Anspruch 1, wobei das Polypropylenharz ein schlagfestes Polypropylenharz ist.

3. Verschluß nach Anspruch 1, wobei das Schaumkonzentrat weiterhin Natriumbicarbonat und Zitronensäure umfaßt.

4. Verschluß nach Anspruch 3, umfassend ca. 3 pphr Schaumkonzentrat und weiterhin umfassend Natriumbicarbonat und Zitronensäure.

5. Verschluß nach Anspruch 1, umfassend ca. 0,2 pphr Calciumcarbonat.

6. Verschluß nach Anspruch 1, umfassend ca. 0,1 pphr amorphes Siliciumdioxid.

7. Verschluß nach Anspruch 1, umfassend ca. 0,2 pphr synthetisches Wachs.

8. Verschluß nach Anspruch 1, umfassend ca. 0,1 pphr destilliertes Monoglycerid.

9. Verschluß nach Anspruch 1, umfassend ca. 0,2 pphr N,N'-Dioleoylethylendiamin.

10. Verschluß nach Anspruch 1, umfassend ca. 0,1 pphr Calciumstearoyl-2-lactylat.

11. Verschluß nach Anspruch 1, umfassend ca. 0,25 pphr ungesättigtes Fettsäure-Monoamid.

12. Verschluß nach Anspruch 1, umfassend ca. 1 pphr Titandioxidkonzentrat.

13. Verschluß nach Anspruch 1, wobei der Verschluß ein Flaschenverschluß ist, umfassend integral geformte, polymere End- und Seitenwände, wobei die Endwand weiterhin eine nicht geschäumte erste Schicht und eine zweite, relativ weniger dicht geschäumte Schicht umfaßt, die in situ gebildet ist.

14. Eine formbare und schäumbare thermoplastische Zusammensetzung,umfassend eine Hauptmenge an formbarem Polypropylenharz, dadurch gekennzeichnet, daß die Zusammensetzung weiterhin umfaßt von 1,25 bis 6 Teile pro 100 Teile Harz (pphr) Schaumkonzentrat, von 0,15 bis 1 pphr Calciumcarbonat, von 0,03 bis 0,15 pphr amorphes Siliciumdioxid, von 0,1 bis 0,4 pphr Gleitmittel ausgewählt aus der Gruppe von synthetischen Wachsen und destillierten Monoglyceriden, von 0,1 bis 0,4 pphr Gleitmittel ausgewählt aus der Gruppe von N,N'-Dioleoylethylendiamin und Calciumstearoyl-2-lactylat, von 0,15 bis 0,3 pphr ungesättigtes Fettsäuremonoamid und von 0,5 bis 2 pphr Titandioxidkonzentrat.

15. Zusammensetzung nach Anspruch 14, wobei das Polypropylenharz ein schlagfestes Polypropylenharz ist.

16. Zusammensetzung nach Anspruch 14, wobei das Schaumkonzentrat weiterhin Natriumbicarbonat und Zitronensäure umfaßt.

17. Zusammensetzung nach Anspruch 16, umfassend ca. 3 pphr Schaumkonzentrat und weiterhin umfassend Natriumbicarbonat und Zitronensäure.

18. Zusammensetzung nach Anspruch 14, umfassend ca. 0,2 pphr Calciumcarbonat.

## Revendications

1. Obturateur pour récipient polymère moulé ayant une couche d'étanchéité expansée moulée simultanément , ledit obturateur pour récipient étant moulé à partir d'une composition moulable comprenant pour la plus grande partie du polypropylène, et caractérisé en ce que la résine moulable comprend par ailleurs de 1,25 à 6 parties par cent parties de résine (pphr) de concentré de mousse , de 0,15 à 1 pphr de carbonate de calcium, de 0,03 à 0,15 pphr de bioxyde de silicium amorphe , de 0,1 à 0,4 pphr de lubrifiant choisi dans le groupe constitué des cires synthétiques et des monoglycérides distillés, de 0,1 à 0,4 pphr de lubrifiant choisi dans le groupe constitué de la N,N'-dioléoyléthylènediamine et du stéaroyl-2-lactylate de calcium, de 0,15 à 0,3 pphr d'un monoamide gras insaturé et de 0,5 à 2 pphr de concentré de bioxyde de titane.

2. Obturateur selon la revendication 1, dans lequel ladite résine de polypropylène est une résine de polypropylène résistant aux chocs .

3. Obturateur selon la revendication 1, dans lequel ledit concentré de mousse comprend par ailleurs du bicarbonate de sodium et de l'acide citrique .

4. Obturateur selon la revendication 3, comprenant environ 3 pphr de concentré de mousse et comprenant par ailleurs du bicarbonate de sodium et de l'acide citrique .

5. Obturateur selon la revendication 1, comprenant environ 0,2 pphr de carbonate de calcium.

6. Obturateur selon la revendication 1, comprenant environ 0,1 pphr de bioxyde de silicium amorphe.

7. Obturateur selon la revendication 1, comprenant environ 0,2 pphr de cire synthétique.

8. Obturateur selon la revendication 1, comprenant environ 0,1 pphr de monoglycéride distillé .

9. Obturateur selon la revendication 1, comprenant environ 0,2 pphr de N,N'-dioléoyléthylènediamine.

10. Obturateur selon la revendication 1, comprenant environ 0,1 pphr de stéaroyl-2-lactylate de calcium.

11. Obturateur selon la revendication 1, comprenant environ 0,25 pphr de monoamide gras insaturé.

12. Obturateur selon la revendication 1, comprenant environ 1 pphr de concentré de bioxyde de titane .

13. Obturateur selon la revendication 1, dans lequel ledit obturateur est un bouchon de bouteille comprenant des parois terminale et latérale de polymère moulées d'une pièce, ladite paroi terminale comprenant par ailleurs une première couche non expansée et une seconde couche expansée relativement moins dense qui est formée in situ .

14. Composition thermoplastique moulable et expansible comprenant pour la plus grande partie une résine de polypropylène moulable , caractérisée en ce que ladite composition comprend par ailleurs de 1,25 à 6 parties par cent parties de résine (pphr) de concentré de mousse , de 0,15 à 1 pphr de carbonate de calcium, de 0,03 à 0,15 pphr de bioxyde de silicium amorphe, de 0,1 à 0,4 pphr de lubrifiant choisi dans le groupe constitué des cires synthétiques et des monoglycérides distillés , de 0,1 à 0,4 pphr de lubrifiant choisi dans le groupe constitué de la N,N'-dioléoyléthylènediamine et du stéaroyl-2-lactylate de calcium, de 0,15 à 0,3 pphr de monoamide gras insaturé et de 0,5 à 2 pphr de concentré de bioxyde de titane.

15. Composition selon la revendication 14 dans laquelle ladite résine de polypropylène est une résine de polypropylène résistant aux chocs .

16. Composition selon la revendication 14, dans laquelle ledit concentré de mousse comprend par ailleurs du bicarbonate de sodium et de l'acide citrique .

17. Composition selon la revendication 16, comprenant environ 3 pphr de concentré de mousse et comprenant par ailleurs du bicarbonate de sodium et de l'acide citrique .

18. Composition selon la revendication 14, comprenant environ 0,2 pphr de carbonate de calcium.
